(19) Europäisches Patentamt
European Patent Office
Office européen des brevets

(11) Publication number: **0 150 021**
**A2**

# (12) EUROPEAN PATENT APPLICATION

(21) Application number: **85100202.2**

(22) Date of filing: **10.01.85**

(51) Int. Cl.[4]: **C 08 L 71/04**
C 08 L 51/04

(30) Priority: **20.01.84 US 572638**

(43) Date of publication of application:
**31.07.85 Bulletin 85/31**

(84) Designated Contracting States:
**DE FR GB IT NL**

(71) Applicant: **GENERAL ELECTRIC COMPANY**
**1 River Road**
**Schenectady New York 12305(US)**

(72) Inventor: **Lee, Gim Fun, Jr.**
**11 Drawbridge Drive**
**Albany New York 12203(US)**

(74) Representative: **Schüler, Horst, Dr. European Patent Attorney et al,**
**Kaiserstrasse 41**
**D-6000 Frankfurt/Main 1(DE)**

## (54) Polyphenylene ether resin compositions having improved melt flow and paintability.

(57) Small amounts of a rubbery interpolymer of alpha-olefins and a diene can be added to blends of polyphenylene ether resin and high impact, rubber modified alkenyl aromatic resin to improve the flow stability and processability while also providing better paint adhesion to the molded article, in comparison with the same amount of polyethylene processing aid.

EP 0 150 021 A2

Croydon Printing Company Ltd.

# POLYPHENYLENE ETHER RESIN COMPOSITIONS HAVING IMPROVED MELT FLOW AND PAINTABILITY

## BACKGROUND OF THE INVENTION

The polyphenylene ether resins alone or together with alkenyl aromatic polymers have been known for some time as a family of engineering thermoplastics which can be shaped into a variety of articles characterized by good chemical, physical and electrical properties. The polyphenylene ether resins and methods of their preparation are disclosed in U.S. Patent Nos. 3,306,874 and 3,306,875 (Hay), in U.S. Patent Nos. 3,257,357 and 3,257,358 (Stamatoff), and elsewhere.

Poly(alkenyl aromatics) as co-ingredients and modifiers for the polyphenylene ether resins are described by Cizek in U.S. Patent No. 3,383,435. Among the alkenyl aromatic polymers which have become known in the art as suitable for use with polyphenylene ethers are high impact, rubber-modified polystyrene resins, for example, polybutadiene-modified polystyrene. The polyphenylene ether resins can also be blended with alkenyl aromatic resins which have been modified by grafting with rubbery interpolymers of alpha-olefins and a diene (known also as EPDM rubber), as is disclosed in U.S. Patent Nos. 3,981,841; 3,960,808; 3,943,191; 4,101,503; 4,139,574; 4,172,929; 4,172,826; and 4,196,116.

Polyethylene is another polymer which has been used in polyphenylene ether resin blends. Typically added in small amounts, this polymer acts as a lubricant or processing aid for the resin, while also conferring some improvement in the impact strength in the molded article. A shortcoming, however, is that even small amounts of polyethylene can and often do adversely affect the adhesion of paints and metallized finishes to the surface of the moldings. If the polyethylene is replaced with the same amount of a linear block copolymer or radial teleblock copolymer, there are comparable improvements in the impact strength and the paint adhesion is better, but the processability, and more specifically, the stability of melt flow, is not as good.

INTRODUCTION TO THE INVENTION

It has now been discovered that a small amount, up to 5 percent by weight, of a rubbery interpolymer of alpha-olefins and a diene, can be added to a blend of a polyphenylene ether resin and an alkenyl aromatic resin to improve the melt processability, but with much better retention of paint adhesion after molding in comparison with the same amount of polyethylene in the blend.

As utilized in the present invention, the rubbery interpolymer of alpha-olefins and a diene, which is free of and unassociated with any other polymer in the blends, is distinguishable from those EPDM rubbers which heretofore have been employed to structurally modify the alkenyl aromatic resin by graft copolymerization therewith. Moreover, just small amounts are used, from about 0.5 up to 5 percent by weight, for each 100 parts of the polyphenylene ether resin and high impact polystyrene combined, which is enough to provide the desired improvements in processability without serious detraction from the adhesion of paints to the surfaces of the molded article. Some increase in the impact strength may also result from the addition.

DESCRIPTION OF THE INVENTION

The compositions of the invention, in general, are comprised of (a) a polyphenylene ether resin, (b) a high impact, rubber modified polystyrene resin and (c) a rubbery interpolymer of alpha-olefins and a diene (EPDM rubber), optionally also including a flame retardant agent.

The invention is typically practiced with the use of certain favored materials. The preferred polyphenylene ether resins are homopolymers or copolymers having units of the formula

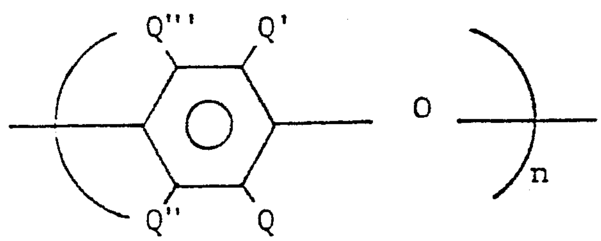

in which Q, Q', Q'' and Q''' are, independently, selected from the group consisting of hydrogen, halogen, hydrocarbon radicals, halohydrocarbon radicals, hydrocarbonoxy radicals, and halohydrocarbonoxy radicals; and n represents the total number of monomer units and is an integer of at least about 20, and more usually at least 50.

The polyphenylene ether resins are, in general, self-condensation products of monohydric, monocyclic phenols produced by reacting the phenols with oxygen in the presence of complex metal catalysts, with the molecular weight being controlled by the reaction time, longer times providing a higher average number of repeating units. Particular procedures are known to those skilled in the art and are described in the patent literature, including the Hay and Stamatoff patents mentioned above.

Suitable phenolic monomers include but are not limited to: 2,6-dimethylphenol; 2,6-diethylphenol; 2,6-dibutylphenol; 2,6-dilaurylphenol; 2,6-dipropylphenol; 2,6-diphenylphenol; 2-methyl-6-ethylphenol; 2-methyl-6-cyclohexylphenol; 2-methyl-6-tolylphenol; 2-methyl-6-methoxyphenol; 2-methyl-6-butylphenol; 2,6-dimethoxyphenol; 2,3,6-trimethylphenol;2,3,5,6-tetramethylphenol; and 2,6-diethoxyphenol.

Some of the polymers which can be produced and which are within the above formula are: poly(2,6-dilauryl-1,4-phenylene)ether; poly(2,6-diphenyl-1,4-phenylene)ether; poly(2,6-dimethoxy-1,4-phenylene)ether; poly(2,6-diethoxy-1,4-phenylene)ether; poly(2-methoxy-6-ethoxy-1,4-phenylene) ether; poly(2-ethyl-6-stearyloxy-1,4-phenylene)ether; poly(2,6-dichloro-1,4-phenylene)ether; poly(2-methyl-6-phenyl-1,4-phenylene)ether; poly(2,6-dibenzyl-1,4-phenylene) ether; poly(2-ethoxy-1,4-phenylene)ether; poly(2-chloro-1,4-phenylene)ether; poly(2,6-dibromo-1,4-phenylene)ether; and the like.

Also included within the above formula are copolymers prepared from mixtures of phenolic monomers. Special mention is made of those based on the reaction of 2,6-dimethylphenol with other phenols, for example, with 2,3,6-trimethylphenol or 2-methyl-6-butylphenol, to produce the corresponding copolymer, for example, poly(2,6-dimethyl-co-2,3,6-trimethylphenol), poly(2,6-dimethyl-co-2-methyl-6-butylphenol), and so forth.

Especially preferred for use in this invention are homopolymers having alkyl substituents in the two positions ortho to the oxygen ether atom, that is, those of the above formula in which Q and Q' are alkyl, and particularly alkyl having from 1 to 4 carbon atoms. Most preferred is poly(2,6-dimethyl-1,4-phenylene ether).

The polyphenylene ether resins are employed in the present compositions in combination with a high impact alkenyl aromatic resin to upgrade the properties.

The preferred rubber modified high impact alkenyl aromatic resins are those in which the alkenyl aromatic portion is derived at least in part from compounds of the formula

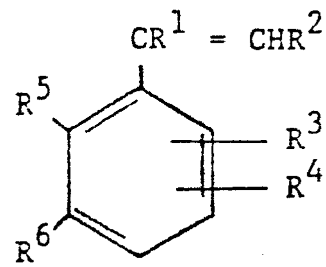

wherein $R^1$ and $R^2$ are selected from the group consisting of lower alkyl or alkenyl groups of from 1 to 6 carbon atoms, and hydrogen; $R^3$ and $R^4$ are selected from the group consisting of chloro, bromo, hydrogen and lower alkyl of from 1 to 6 carbon atoms; $R^5$ and $R^6$ are selected from the group consisting of hydrogen and lower alkyl and alkenyl groups of from 1 to 6 carbon atoms, or $R^5$ or $R^6$ may be concatenated together with hydrocarbyl groups to form a naphthyl group.

Compounds within the above formula include styrene and its homologs and analogs. In addition to styrene, examples include alpha-methyl styrene, para-methyl styrene, 2,4-dimethyl styrene, chlorostyrene, dichlorostyrene, bromostyrene, dibromostyrene, p-tert-butylstyrene, p-ethylstyrene, vinyl xylene, divinylbenzene, and vinyl naphthalene. Styrene is especially preferred.

Suitable rubber modifiers include natural rubber, as well as synthetic rubbers such as polyisoprene, polybutadiene polychloroprene, styrene-butadiene copolymers (SBR rubber), ethylene-propylene copolymers (EPR rubber), acrylonitrile rubbers, polyurethane rubbers and polyorganosiloxane rubbers. The rubber modified poly(alkenyl aromatic) can be prepared conventionally by forming an admixture of the rubber and alkenyl aromatic resin, or alternatively, by polymerizing alkenyl aromatic monomer in the presence of the rubber.

The rubber content can vary widely but generally will range in amount from about 5 to about 45 percent by weight, depending on particular requirements of impact resistant modification.

The polyphenylene ether resin and rubber modified polystyrene resin may vary widely in amount, in accordance with the known behavior of these materials. Thus, for instance the weight ratio of (a) and (b) may be between 99:1 and 1:99, more usually between 95:5 and 5:95, and especially preferably between 35:65 and 65:35 in the present kinds of blends.

Component (c) is selected from among those materials sometimes known collectively in the art as EPDM rubbers, including those prepared from ethylene, an alpha-olefin and a diene. Preferred types comprise terpolymers, or interpolymers, of ethylene, an alpha-olefin containing from 3 to 16 carbon atoms, and a non-conjugated cyclic or open-chain diene having from 5 to 20 carbon atoms.

The alpha-olefins used in making the rubbery polymer are alpha-monoolefins having the formula $CH_2=CHR$, in which R may be saturated alkyl, for example, methyl, ethyl, n-propyl, isopropyl, and so forth. Preferred types are those in which the alpha-monoolefins used are ethylene and propylene.

Examples of suitable dienes which may be used are: 1,4-hexadiene; 1,6-octadiene; 2-methyl-1,5-hexadiene; 6-methyl-1,5-heptadiene; 7-methyl-1,6-octadiene; 11-ethyl-1,11-tridecadiene; 9-ethyl-1,9-undecadiene; isoprene; 1,4-pentadiene; 1,3-pentadiene; 1,4,9-decatriene; myrcene; 1-phenyl-1,3-butadiene; p-diallylbenzene; p-bromoallylbenzene; 4-vinyl-1-cyclohexene; 1,3,5-trivinylcyclohexane; trans-1,2-divinylcyclobutane; 1,5-cyclooctadiene; 1,3,5-cycloheptatriene; 1,5,9-cyclodecatriene; 1,4-cycloheptadiene; cyclopentadiene; 2,2'-dicyclopentenyl; 1,4-bis(cyclopenten-2-yl)butane; 4,7,8,9-tetrahydroindene; 6-methyl-4,7,8,9-tetrahydroindene; bicyclo(3,3,0)-octadiene-2,6-dicyclopentadiene; 2-methyl-2,5-norbornadiene; 5-methylene-2-norbornene; 5-ethylidene-2-norbornene; 5-isopropylidene-2-norbornene; 5-isopropenyl-2-norbornene; and the like.

Methods for making the EPDM rubbers are known to those skilled in the art. They may be prepared by the polymerization reaction of a mixture of the monomers in a material solvent at an elevated temperature, in the presence of a Ziegler catalyst, followed by deactivation of the catalyst by the introduction of a lower alcohol. The disclosures in U.S. Patent Nos. 3,000,866 (Tarney); 3,000,867 (Fisher); and 2,933,480 (Gresham), incorporated herein by reference, are helpful.

Examples of EPDM rubbers which can be prepared by such procedures and which are useful in the practice of this invention are rubbery interpolymers of ethylene, propylene and 5-ethylidene-2-norbornene; of ethylene, propylene and dicyclopentadiene.

The preferred rubbery interpolymer will contain 10-90 mole percent of ethylene, 10-90 mole percent of alpha-olefin and 0.1 to 15 mole percent of diene.

Preferred embodiments of the present compositions will include a minor, effective amount of one or more agents which decrease the normal flammability of the molded composite. These may be selected from among materials containing chemical elements known for their ability to impart flame resistance, for example, bromine, chlorine, antimony, phosporous and nitrogen. Included among them are various aliphatic and aromatic phosphates, phosphonates and phosphites; halogenated (brominated or chlorinated) organic compounds; halogenated organic compounds in admixture with antimony oxide; halogen-containing compounds in admixture with phosphorous compounds containing phosphorous-nitrogen bonds; halogenated (brominated or chlorinated) polymers such as polystyrene and aromatic polycarbonates or their lower molecular weight oligomeric counterparts.

Representative of the preferred flame retardant agents for purposes of this invention are aromatic phosphate compounds having the formula

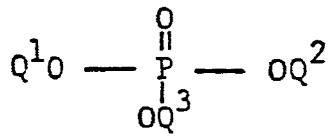

in which each Q represents the same or a different radical selected independently from among alkyl, cycloalkyl, aryl, alkyl-substituted aryl, aryl-substituted alkyl, halogen and hydrogen, with at least one Q always being aryl.

Examples include phenylbisdodecyl phosphate, phenylbisneopentyl phosphate, phenylethylene hydrogen phosphate, phenyl-bis-(3,5,5'-trimethylhexyl phosphate), ethyldiphenyl phosphate, 2-ethylhexyl di(p-tolyl) phosphate, diphenyl hydrogen phosphate, bis(2-ethylhexyl)p-tolylphosphate, tritolyl phosphate, bis(2-ethylhexyl)phenyl phosphate, tri(nonyl-phenyl)phosphate, phenylmethyl hydrogen phosphate, di(dodecyl)p-tolyl phosphate, tricresyl phosphate, triphenyl phosphate, dibutylphenyl phosphate, 2-chloroethyldiphenyl phosphate, p-tolyl-bis-(2,5,5'-trimethylhexyl)phosphate, 2-ethylhexyldiphenyl phosphate, diphenyl hydrogen phosphate, and the like. Most preferred are triphenyl phosphate and its derivatives, for example, isopropylated triphenyl phosphate.

The flame retardant agent is in general added in amounts ranging from about 3 to about 25 parts by weight, for every 100 parts of (a) and (b) together.

The blends in accordance with this invention can also be formulated to contain one or more supplementary ingredients. In general, these will be selected from among those materials sometimes added to polyphenylene ether resins and blends as inert extenders or to improve the chemical and physical properties of the melt or moldings. Examples include mineral fillers, such as clay, mica or talc; reinforcing agents, such as glass fibers, flakes or spheres, titanate whiskers, or carbon fibers,

pigments, such as carbon black or titanium dioxide (which may also function as fillers); dyes; stabilizers and/or antioxidants; UV screening agents; and so forth. Conventional amounts are employed, usually ranging from about 1 to about 60 percent by weight of the total composition.

Preparation of the compositions may be accomplished in various conventional ways. In one procedure, the ingredients are mixed together to form a preblend, the preblend is extruded at a temperature of from 450 to 600 °F., the extrudate is cooled, cut into pieces and injection molded at a temperature of from 425 to 525 °F. ( 100 to 170 °F. mold temperature).

The compositions of the invention can be prepared into the wide variety of products for which polyphenylene ether resin blends are known, and particularly those in which decorative paints or metallized finishes are to be applied on the surface, as by brushing, spray coating, dip coating, chemical deposition, and so forth. Products for which these compositions are useful include exterior automative parts, such as grilles, headlamp bezels. wheelcovers and decorative trim; interior automative parts, such as center consoles, rear window shelves, speaker and defogger grilles; major household appliances, such as laundry and dishwasher consoles, detergent dispensers, ice maker components, and air conditioning fans and grilles; small household appliances, such as floor care utensils, power tools, coffee makers, clothes irons, food processors, hairsetters, curling irons and shower massagers; office business machines, including bases and housings; and TV sets.

DESCRIPTION OF THE SPECIFIC EMBODIMENTS

The invention is illustrated in the following example, which is included for instructive purposes only and should not be construed as limiting.

EXAMPLE

A blend in accordance with the invention was prepared by forming a premix of 55 parts by weight of poly(2,6-dimethyl-1,4-phenylene ether)resin (PPO®, General Electric Co.), 45 parts by weight of a rubber modified high impact polystyrene resin (FG834, American Hoechst), 3.5 parts by weight of isopropylated triphenyl phosphate, 1.0 part by weight of diphenyl decyl phosphite, 0.15 part by weight of zinc sulfide, 0.15 part by weight of zinc oxide and 1.5 part by weight of EPDM rubber (Nordel 1500). The mixture was extruded at a temperature of 560°F., using a 28mm WP extruder, then injection molded at a temperature of 525°F. ( 150°C. mold temperature).

For comparison purposes, the procedure was repeated, except that in each case the EPDM rubber was replaced with another polymeric material as noted in the Table below. The physical properties for the molded compositions are reported in the Table.

Paint adhesion was measured on duplicate molded test chips as follows:

Molded 8" x 6" x 1/8" plaques were painted with Bee Chemical's SF 444 acrylic-base black lacquer thinned with a 50/50 mixture of methanol and acetone. After drying, the painted surface was cross-hatched with a knife, then pull-tested with adhesion tape, in accordance with ASTM - D3359. If the tape was paint-free, the specimen was rated "0"(or excellent, best adhesion). If a great deal of paint adhered to the tape, the specimen was rated "5" (or very poor, no adhesion). The quality range scale ranges from "0" (best) to "5" (worst).

TABLE: Effects of Various Additives on Properties of Polyphenylene Ether Resin - High Impact Polystyrene Blend

| Example | Additive | Tensile yield, psi | Tensile strength, psi | Tensile Elong., % | Notched Izod Impact Strength, ft.lb./in. of notch |
|---|---|---|---|---|---|
| Control | None | 9,800 | 8,175 | 39 | 2.6 |
| 1 | Nordel 1500 EPDM rubber | 9,530 | 8,530 | 74 | 3.5 |
| A* | Allied Chem.'s AC-6 polyethylene | 9,370 | 8,070 | 53 | 2.6 |
| B* | Rexene 126 polyethylene | 9,400 | 8,430 | 70 | 3.4 |
| C* | Allied Chem.'s AC-60-007 polyethylene | 9,700 | 8,270 | 45 | 3.6 |
| D* | Shell's KG 1651 styrene-ethylene/ butylene-styrene block copolymer | 9,530 | 8,270 | 60 | 3.5 |
| E* | Shell's KG 1652 styrene-ethylene/ butylene-styrene block copolymer | 9,700 | 8,230 | 57 | 3.7 |
| F* | Shell K 1101 styrene-butadiene-styrene block copolymer | 9,430 | 8,100 | 43 | 3.4 |
| G* | Phillips Petroleum's Solprene 411 | 9,400 | 8,170 | 56 | 3.3 |

* comparison experiment

TABLE (Cont'd)
Brabender Results

| Example | Gardner Impact Strength, in.-lb. | Torque, m-gm | Torque Fluctuations, m-gm | Head Pressure, psi x $10^{-2}$ | Paint Adhesion Ratings |
|---|---|---|---|---|---|
| Control | 100 | 6000 | 1000 | 58.5 | 0,1 |
| 1 | 140 | 3100 | 100 | 56 | 1,1 |
| A* | 140 | 3100 | 100 | 58 | 5,4 |
| B* | 140 | 3100 | 200 | 55 | 5,5 |
| C* | 120 | 4100 | 500 | 56 | 4,4 |
| D* | 140 | 4400 | 700 | 57 | 1,1 |
| E* | 160 | 5700 | 1000 | 57 | 5,4 |
| F* | 120 | 5700 | 1000 | 58 | 1/2,0 |
| G* | 140 | 5900 | 700 | 58 | 3,2 |

* comparison experiment

All of the aforementioned patents are incorporated herein by reference.

Other modifications and variations of the invention are possible in the light of the above description. It is to be understood, therefore, that changes may be made in the embodiments shown which are within the scope of the appended claims.

/
/
/
/
/
/
/
/
/
/
/
/
/
/
/
/
/
/
/
/
/
/
/
/
/
/
/
/
/

CLAIMS:

1. A thermoplastic composition, comprising an admixture of:

(a) a polyphenylene ether resin;

(b) a high impact, rubber modified polystyrene resin; and

(c) a free rubbery interpolymer of a mixture of mono-olefins and a diene, said component (c) being present in an amount sufficient to improve the processability of (a) and (b) but not in excess of 5 parts by weight per 100 parts of (a) and (b) together.

2. A composition according to Claim 1, in which (c) is present in an amount of from about 0.5 to 5 parts of weight per 100 parts of (a) and (b) together.

3. A composition according to Claim 1, in which (c) is a terpolymer of ethylene, a $C_3$ to $C_{16}$ alpha-olefin and a non-conjugated cyclic diene or open-chain diene having from 5 to 20 carbon atoms.

4. A composition according to Claim 3, in which (c) is a rubbery terpolymer of ethylene, propylene and said diene.

5. A composition according to Claim 1, in which the polyphenylene ether resin is a homopolymer or copolymer having units of the formula

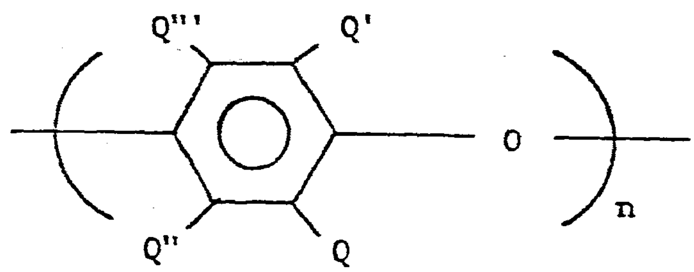

in which Q, Q', Q'' and Q''' are, independently, selected from the group consisting of hydrogen, halogen, hydrocarbon radicals, halohydrocarbon radicals, hydrocarbonoxy radicals, and halohydrocarbonoxy radicals; and n represents the total number of monomer units and is an integer of at least about 20.

6. A composition according to Claim 1, in which the polyphenylene ether resin is poly(2,6-dimethyl-1,4-phenylene ether) resin.

7. A composition according to Claim 1, in which the alkenyl aromatic resin portion of component (b) is derived from a compound having the formula

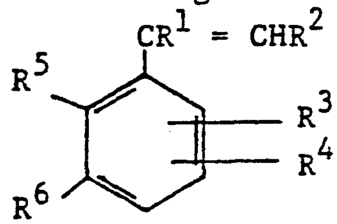

wherein $R^1$ and $R^2$ are selected from the group consisting of lower alkyl or alkenyl groups of from 1 to 6 carbon atoms, and hydrogen; $R^3$ and $R^4$ are selected from the group consisting of chloro, bromo, hydrogen and lower alkyl of from 1 to 6 carbon atoms; $R^5$ and $R^6$ are selected from the group consisting of hydrogen and lower alkyl and alkenyl groups of from 1 to 6 carbon atoms, or $R^5$ or $R^6$ may be concatenated together with hydrocarbyl groups to form a naphthyl group.

8. A composition according to Claim 7, in which component (b) is a rubber modified, high impact polystyrene resin.

9. A composition according to Claim 1, which also includes an effective amount of a flame retardant agent.

10. A composition according to Claim 9, in which the flame retardant agent is an aromatic phosphate compound having the formula

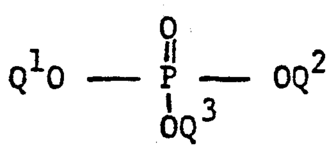

in which each Q represents the same or a different radical selected independently from among alkyl, cycloalkyl, aryl, alkyl-substituted aryl, aryl-substituted alkyl, halogen and hydrogen, with at least one Q always being aryl.

11. A composition according to Claim 10, in which the aromatic phosphate is triphenyl phosphate.

12. A composition according to Claim 11, in which the triphenyl phosphate is isopropylated.

13. A composition according to Claim 1, in which includes one or more additives selected from among mineral fillers, reinforcing agents, coloring agents, stabilizers and antioxidants.

14. A method for improving the processability of a blend of (a) a polyphenylene ether resin and (b) a high impact, rubber modified poly (alkenyl aromatic) resin, comprising including in the blend up to 5 parts by weight of (c) a free rubbery interpolymer of a mixture of mono-olefins and a diene, per 100 parts of (a) and (b) combined, said (c) providing better retention of paint adhesion in the molded article in comparison with same amount of polyethylene.

15. A method according to Claim 14, in which (c) is added in an amount from about 0.5 to 5 parts by weight, per 100 parts of (a) and (b) together.

16. A method according to Claim 14, in which (c) is a terpolymer of ethylene, a $C_3$ to $C_{16}$ alpha-olefin and a non-conjugated cyclic diene or open-chain diene having from 5 to 20 carbon atoms.

17. A method according to Claim 16, in which (c) is a rubbery terpolymer of ethylene, propylene and said diene.

18. A method according to Claim 14, in which the polyphenylene ether resin is a homopolymer or copolymer having units of the formula

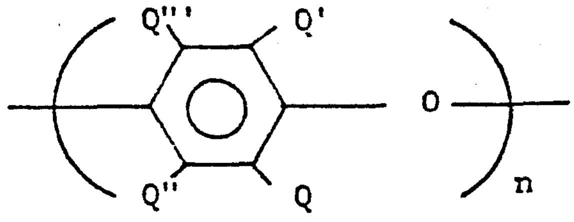

in which Q, Q', Q" and Q''' are,independently, selected from the group consisting of hydrogen, halogen, hydrocarbon radicals, halohydrocarbon radicals, hydrocarbonoxy radicals, and halohydrocarbonoxy radicals; and n represents the total number of monomer units and is an integer of at least about 20.

19. A method according to Claim 14, in which the polyphenylene ether resin is poly(2,6-dimethyl-1,4-phenylene ether).

20. A method according to Claim 14, in which the alkenyl aromatic resin portion of (b) is derived from a compound having the formula

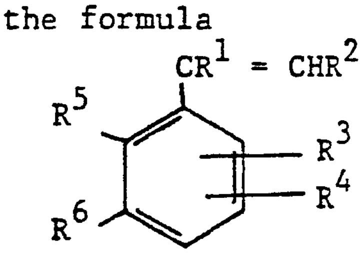

wherein $R^1$ and $R^2$ are selected from the group consisting of lower alkyl or alkenyl groups of from 1 to 6 carbon atoms, and hydrogen; $R^3$ and $R^4$ are selected from the group consisting of chloro, bromo, hydrogen and lower alkyl of from 1 to 6 carbon atoms; $R^5$ and $R^6$ are selected from the group consisting of hydrogen and lower alkyl and alkenyl groups of from 1 to 6 carbon atoms, or $R^5$ or $R^6$ may be concatenated together with hydrocarbyl groups to form a naphthyl group.

21. A composition according to Claim 20, in which (b) is a rubber modified, high impact polystyrene resin.

22. A composition according to Claim 14, which further comprises adding to the blend an effective amount of a flame retardant agent.

23. A composition according to Claim 22, in which the flame retardant agent is an aromatic phosphate compound having the formula

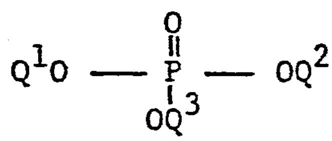

in which each Q represents the same or a different radical selected independently from among alkyl, cycloalkyl, aryl, alkyl-substituted aryl, aryl-substituted alkyl, halogen and hydrogen, with at least one Q always being aryl.

24. A method according to Claim 23, in which the aromatic phosphate is triphenyl phosphate.

25. A method according to Claim 24, in which the triphenyl phosphate is isopropylated.

/
/
/
/
/
/
/
/
/
/
/
/
/
/
/
/
/